# EUROPEAN PATENT APPLICATION

(11) **EP 3 316 531 A1**
(43) Date of publication of application: **02.05.2018**
(21) Application number: 16196534.8
(22) Date of filing: 31.10.2016
(51) Int. Cl.: H04L 12/801, H04N 21/6583, H04L 29/06, H04N 21/6377, H04N 21/6373

(54) **METHOD TO TRANSMIT AN AUDIO/VIDEO STREAM OF TO A DESTINATION DEVICE**

(71) Applicant: Nagravision S.A., 1033 Cheseaux-sur-Lausanne (CH)
(72) Inventor: DEVALLONNÉ, Luc, 1009 Pully (CH)
(74) Representative: Leman Consulting S.A.

(57) **Abstract**

The present disclosure refers to the field of streaming media content to a client device. In the frame of the present disclosure, it is proposed a method and system to transmit an audio/video stream of to a destination device, said audio/video stream comprising a plurality first segments, each representing a first duration of video at original bit-rate, said method comprising :
- receiving and decompressing by a transcoding node the audio/video stream to obtain a decompressed video stream and an audio stream,
- dividing the decompressed video stream into a plurality of second segments, each segment representing a second duration of video at original bit-rate, said second duration being smaller than the first duration,
- generating at least one low bit-rate version of the second segment, and compressing the at least one low bit-rate segment and the second segment, multiplexing the at least one low bit-rate segment, the second segment and the audio segment to produce a multi-bit-rate stream, transmitting the multi-bit-rate stream to at least one Network Access Point,
- demultiplexing by the Network Access Point the multi-bit-rate stream to obtain the second segment and the at least one lower bit-rate segment,
- receiving by the Network Access Point from the destination device a request to the audio/video stream, selecting the original bit-rate segment or one of the lower bit-rate segments, multiplexing the selected segment with the audio segment to form a multiplexed segment, transmitting the multiplexed segment to the destination device, receiving at least one acknowledgement message from the destination device that the multiplexed segment has been received, determining, by the Network Access Point, a level of completion of the multiplexed segment by the destination device, said level of completion being derived from the acknowledgment message, selecting the original bit-rate segment or one of the lower bit-rate segment based on the level of completion for the further multiplexed segment.

## Description

### Introduction

The present disclosure refers to the field of streaming media content to a client device. HTTP Live Streaming (HLS) has emerged as the standard in adaptive bitrate video. Adaptive bitrate video delivery is a combination of server and client software that detects a client's bandwidth capacity and adjusts the quality of the video stream between multiple bitrates and/or resolutions. The adaptive bitrate video has the advantage to delivering a standard video file at a single bitrate, since the video stream can be switched midstream to follow the capacity of the client's available network speed.

HLS (HTTP Live Streaming), is a streaming protocol developed by Apple for online streaming of video or audio to iOS devices such as iPhones and iPads, from a regular HTTP web server rather than a specialized media streaming server. Originally used only for Apple devices, HLS is now supported by additional devices such as Android-based smartphones. HLS can distribute both live and on-demand files and is one of the main technology for adaptively streaming to Apple devices, which is an increasingly important target segment to streaming publishers.

HTTP live streaming works by splitting the stream into a sequence of small HTTP-based video files, each file being a short chunk of an overall potentially unbounded transport stream. As the stream is played, the playback device may select from a number of different alternate streams containing the same material encoded at a variety of data rates, allowing the streaming session to adapt to a wide range of available bandwidth.

HLS supports live video streaming as well as video on demand (VOD). For a live video broadcast, the stream segment files are created continuously and the manifests are regularly refreshed.

At a high level, HLS works like all adaptive streaming technologies; a set of multiple files are created for distribution to the player, which can adaptively change streams to optimize the playback experience. As an HTTP-based technology, no streaming server is required, so all the switching logic resides on the player.

To distribute to HLS clients, the source is encoded into multiple files at different data rates and is divided them into short chunks, usually between 5-10 seconds long. These are loaded onto an HTTP server along with a text-based manifest file that directs the player to additional manifest files for each of the encoded streams.

UDP stands for User Datagram Protocol - a datagram is the same thing as a packet of information. The UDP protocol works similarly to TCP, but it bypasses all the error-checking. All the back-and-forth communication and deliverability guarantees slow things down.

When using UDP, packets are just sent to the recipient. The sender won't wait to make sure the recipient received the packet - it will just continue sending the next packets. UDP is used when speed and scalability is desirable and error correction isn't necessary. For example, UDP is frequently used for live broadcasts and online games.

Live streams are often broadcast using UDP instead of TCP. The server just sends a constant stream of UDP packets to computers watching. the connection is lost for a few seconds, the video will freeze for a moment and then jump to the current bit of the broadcast, skipping the bits missed. If one experience minor packet-loss, the video or audio may be distorted for a moment as the video continues to play without the missing data.

### Brief description of the figures

The present disclosure will be illustrated by the attached figures, given as non limiting examples, namely :
- figure 1 illustrates the various components from a content provider to a destination device,
- figure 2 illustrates the media content processed by a Network Access Point,
- figure 3 illustrates an example of the modules constituting a Network Access Point.

### Detailed description

One aspect of the present disclosure is to propose a transmission method for an audio/video content to a destination device. The destination device is connected via an Internet connection with a Network Access Point (NAP). A Network Access Point is the node of contact with the Destination Device and receiving requests to deliver audio/video contents. The Network Access Point is usually connected to a plurality of Destination Devices and handles the requests of audio/video contents from Destination Devices concurrently. The NAP is located close to the destination devices, for example in the Internet community router. The protocol used to request audio/video content is HTTP so that the compatibility among the Destination Devices is not an issue.

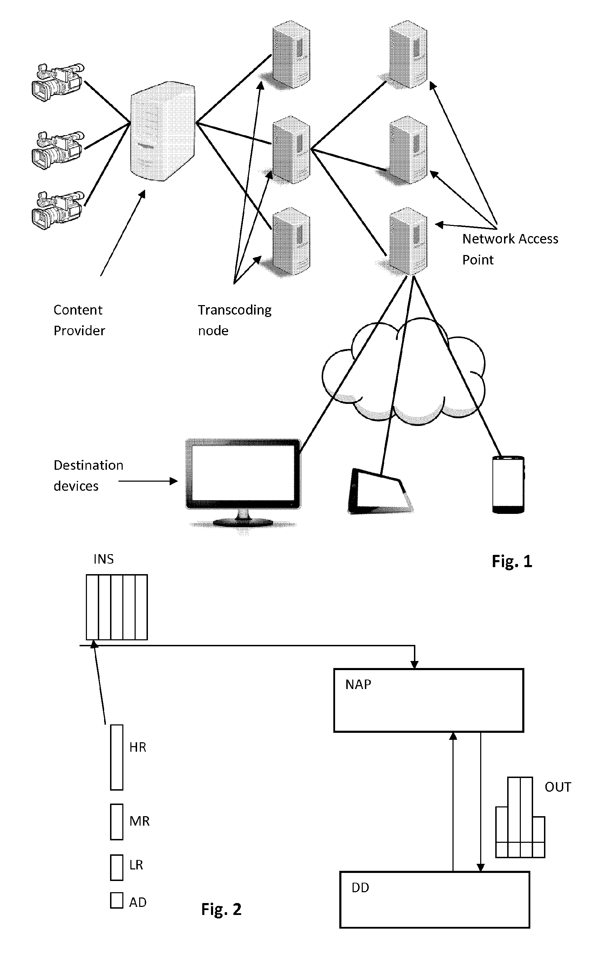

The figure 1 illustrates the various components used to transmit an audio/video stream to a destination device. The Content Provider is the one producing the original audio/video stream. The Content Provider can deliver more than one stream at a time, for example in the case of a television producer. The Content provider produces the audio/video stream in compressed form and is connected to one or more Transcoding Nodes.

The Transcoding node is in charge of producing the multi-bit rate stream from the audio/video stream as explained in details below.

The Network Access Point receives the multi- bit rate stream from the transcoding node connected via a fast communication and reliable line. It is to be noted that a transcoding node can transmit the same content to a plurality of Network Access Point. An audio/video stream according to one example is a television channel. The Transcoding Node handles a plurality of channels and transmits them to the Network Access Points.

As illustrated in the figure 1, the Network Access Point can be in connection with a plurality of Destination Devices. Example of Destination Devices can be a television, a personal computer, a tablet, a smartphone or any devices able to render audio/video content. The connection between the Network Access Point and the Destination Device is preferably an Internet connection.

According to one example, the transcoding node receives the audio/video content as a stream in Transport Stream packets from a content provider. The audio/video content is organized in first segments representing a first duration. A segment is a Group of Pictures (GOP) starting with a I frame (i.e. contains the full image and do not require any additional information to reconstruct it) and followed by P/B frames (i.e. containing the difference versus the I frame). The first duration is approximately 10 seconds but can vary according to the implementation. The video frames are in full resolution (also named original resolution) thus representing the video at original bit-rate. The video frames are for example compliant with the standard H.264. As a video codec, H.264 can be incorporated into multiple container formats, and is frequently produced in the MPEG-4 container format, which uses the .MP4 extension, as well as QuickTime (.MOV), Flash (.F4V), 3GP for mobile phones (.3GP), and the MPEG transport stream (.ts). Most of the time, but not all the time, H.264 video is encoded with audio compressed with the AAC (Advanced Audio Coding) codec, which is an ISO/IEC standard (MPEG4 Part 3).

Once the audio/video content is received by the transcoding node, it is decompressed to obtain a first segment of a first duration in decompressed form and an audio segment. The first segments are concatenated in a buffer of the transcoding node to produce a portion of the video sequence. The transcoding node then divides the video sequence into second segments for which the duration is smaller than the first duration. Typical example of second duration is 1 second. Once the second segment of the decompressed video is defined, the transcoding node generates at least one lower bit rate version of the original second segment. This can be achieved through a re-sampling of the original images of the second segment or by adjusting the parameters of the compression. For the example explained in the present disclosure, the transcoding node produces two lower bit rate versions of the original segment, namely the medium bit rate segment and the low bit rate segment.

The transcoding node then generates a multi-bit rate stream comprising several sub-streams namely the audio stream, the original second segment in compressed form, and the two lower bit rate versions of the original segment in compressed form. The Program Allocation Table (PMT) is updated to contain the description of the sub-streams into the multi-bit rate stream.

It is to be noted that the transcoding node can produce more than one multi-bit rate stream at a time, and according to an exemplary embodiment, a multi-bit rate stream is a television channel.

The multi-bit rate stream is received by one of the Network Access Point in view of serving the destination devices.

The figure 2 illustrates the processing by the Network Access Point (NAP) and the transmission of the multiplexed segment to the destination device (DD). The Input Stream (INS) is received from the Transcoding Node. This Input Stream (INS) is a multi-bit rate stream comprising, according to this example, four sub-streams. In our case, we have one sub-stream for the audio (AD), one sub-stream for the low bit rate segment (LR), one sub-stream for the medium bit rate segment (MR) and one sub-stream for the high (or original) bit rate segment (HR). The multi- bit rate stream can further comprise another audio sub-stream (for another language) or a data sub-stream carrying metadata or control access data.

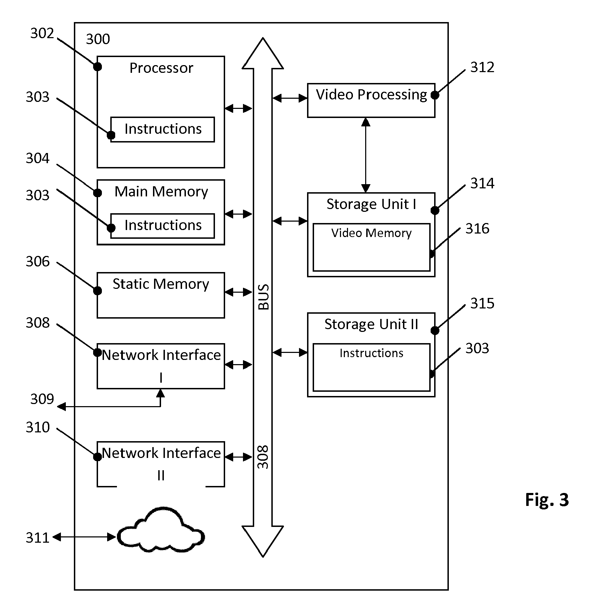

The Network Access Point de-multiplexes the stream to obtain the audio segment, the original bit rate segment, the medium bit rate segment and the low bit rate segment. The Network Access Point comprises a buffer memory (see Video Memory of figure 3) storing each segment in a timeline fashion.

**Table 1**

| | T1 | T2 | Tn |
|---|---|---|---|
| Low | SL1 | SL2 | SLn |
| Medium | SM1 | SM2 | SMn |
| High | SH1 | SH2 | SHn |

The Table 1 illustrates the content of the buffer memory. The Network Access Point stores only several portions T1, T2 ... Tn to accommodate the different paces of the destination devices. One device is waiting for the portion T2 while the other one is processing the portion T1. A portion represents a group of pictures having a second duration, available in more than one bit rate. In the table above, each portion comprises three segments of different bit rates. SLx represents the segment at low bit rate for the portion Tx. SMx represents the segment at medium bit rate for the portion Tx. SHx represents the segment at high bit rate for the portion Tx.

A request is received by the Network Access Point, this request being sent by a destination device via an HTTP connection. The destination device sends a HTTP GET request to the Network Access Point to obtain a video content. The request contains a description of the video content that the destination device is willing to obtain.

Using the description, the Network Access Point retrieves in the buffer memory the most current portion corresponding to the description. The Network Access Point has then the choice to select one of the segments in one of the bit rate. The initial selection can be a parameter in the Network Access Point, for example the first transmitted segment is always a medium bit rate segment or a high bit rate segment. It is to be noted that the selection is made by the Network Access Point instead of by the destination device (see HLS specification).

Once the segment has been chosen, the Network Access Point assembles the selected segment with the corresponding audio segment to create a multiplexed segment. This multiplexed segment is sent to the destination device. The figure 2 illustrates an example with four portions being transmitted to the destination device, representing four Group of Pictures. The first one represents the case in which the medium bit rate segment was selected by the Network Access Point. The second and third portions represent a selection of the high bit rate segment and the fourth one represents the case in which the lower bit rate segment was selected.

The multiplexed segment can be packetized as MPEG-TS packets sent over an HTTP connection. The destination device sends a confirmation of receipt each time a packet is received. The Network Access Point determines a level of completion of the transmission of the multiplexed segment, said level of completion being determined by the confirmation of receipt of the last packet of the multiplexed segment. The confirmation of receipt of the last packet plays the role of an acknowledgement message for the multiplexed segment. The Network Access Point can then determine the transmission time of the multiplexed segment calculated between the beginning of the transmission of the multiplexed segment and the reception of the acknowledgement message.

The level of completion is positive if the transmission time is smaller or equal to the second duration. Otherwise, the level of completion is negative. In case of a positive level of completion, the destination device can accommodate the reception of a segment at a time interval at least equal to the second duration.

The Network Access Point should then select the next segment for transmission to the destination device. The selection will be made based in the calculated transmission time. If the transmission time is smaller than the second duration, the Network Access Point can keep the same segment of select a segment of higher bit rate (if available). If the transmission time is longer than the second duration, it means that the destination device cannot receive the multiplexed segment at the pace required by the transmission of the selected media content. Then the Network Access Point selects a segment of lower bit rate. Once the Network Access Point has determined that the destination device cannot receive the segment within the second duration, another segment of a lower bit rate should be selected. In case that more than one lower bit rate is available (medium and low resolution segments), the Network Access Point can determine the available bandwidth based on the transmission time to transmit the previous segment and the size of the previous segment. Based on the bandwidth and the size of the medium bit rate segment, the Network Access Point can determine if the medium bit rate segment can be transmitted with the available bandwidth. In the positive event, this segment is selected otherwise the low bit rate segment is selected.

In the same manner, in case that the transmission of the current segment is within the second duration and higher bit rate segments are available, before switching to an higher bit rate segment, the Network Access Point determines the available bandwidth based on the transmission time to transmit the current segment and the size of the current segment and determine if the available bandwidth is sufficient to transmit a segment of bigger size during the second duration. This determination can be made for each segment of higher bit rate and the selection of the next segment is the one of higher bit rate for which the available bandwidth is sufficient to accommodate the transmission of the selected segment during a time equal or smaller than the second duration.

In an alternate embodiment, the acknowledgment message can comprise further information about the processing of the media content by the destination device. The HTTP acknowledgment is implemented in the lower layers of the communication protocol. The fact that the segment has been duly received characterizes the communication between the Network Access Point and the destination device. In the case of a destination device with low processing capabilities, the application layer processing the segment for the display could be overloaded. The destination device inserts into the acknowledgment message a warning indication informing the Network Access Point that the processing of the segment at the required speed is not possible. The Network Access Point automatically overrides the level of completion based on the transmission time and selects a lower bit rate segment.

FIG. 3 is a block diagram illustrating components of a Network Access Point 300, according to some example embodiments, able to read instructions from a machine-readable medium (e.g., a machine-readable storage medium) and perform any one or more of the methodologies discussed herein. Specifically, FIG. 3 shows a diagrammatic representation of the Network Access Point 300 in the example form of a computer system and within which instructions 303 (e.g., software, a program, an application, an applet, an app, or other executable code) for causing the Network Access Point 300 to perform any one or more of the methodologies discussed herein may be executed. In alternative embodiments, the Network Access Point 300 operates as a standalone device or may be connected (e.g., networked) to other machines. In a networked deployment, the Network Access Point 300 may operate in the capacity of a server machine or a client machine in a server-client network environment, or as a peer machine in a peer-to-peer (or distributed) network environment. The Network Access Point 300 may be a server computer, a client computer, a personal computer (PC), a network router, a network switch, a network bridge, or any machine capable of executing the instructions 303, sequentially or otherwise, that specify actions to be taken by that machine. Further, while only a single machine is illustrated, the term "machine" shall also be taken to include a collection of machines that individually or jointly execute the instructions 303 to perform any one or more of the methodologies discussed herein.

The Network Access Point 300 includes a processor 302 (e.g., a central processing unit (CPU), a digital signal processor (DSP), an application specific integrated circuit (ASIC), or any suitable combination thereof), a main memory 304, and a static memory 306, which are configured to communicate with each other via a bus 308. The Network Access Point 300 may further include a first Network Interface 308 in communication with the transcoding node. This first Network Interface 308 is used to receive the multi-bit rate stream from the transcoding node.

The Network Access Point 300 includes a first storage unit I 315 on which is stored the instructions 303 embodying any one or more of the methodologies or functions described herein. The instructions 303 may also reside, completely or at least partially, within the main memory 304, within the processor 302 (e.g., within the processor's cache memory), or both, during execution thereof by the machine 300. Accordingly, the main memory 304 and the processor 302 may be considered as machine-readable media.

As used herein, the term "memory" refers to a machine-readable medium able to store data temporarily or permanently and may be taken to include, but not be limited to, random-access memory (RAM), read-only memory (ROM), buffer memory, flash memory, and cache memory. While the storage unit 315 is shown in an example embodiment to be a single medium, the term "storage unit" should be taken to include a single medium or multiple media (e.g., a centralized or distributed database, or associated caches and servers) able to store instructions.

The instructions 303 may further be transmitted or received over a communications network 309 or 311 using a transmission medium via the network interface device 308 or 310 and utilizing any one of a number of well-known transfer protocols (e.g., HTTP). Examples of communication networks include a local area network (LAN), a wide area network (WAN), the Internet, mobile telephone networks, POTS networks, and wireless data networks (e.g., WiFi and WiMAX networks). The term "transmission medium" shall be taken to include any intangible medium that is capable of storing, encoding, or carrying instructions for execution by the machine 300, and includes digital or analog communications signals or other intangible medium to facilitate communication of such software.

The Network Access Point 300 further includes a second storage unit II 314 dedicated to the storage of the audio/video stream into a multimedia memory 316. This multimedia memory is used as a buffer to store the video segments in different bit rates s. The video processing 312 is in charge of processing the multi-bit rate stream received from the transcoding node, and extracting the segments from the stream ready for the destination device's request. The Video Processing is also in charge of preparing the multiplexed segment with one of the selected segment stored in the video memory and audio segment.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field programmable gate array (FPGA) or an ASIC. A hardware module may also include programmable logic or circuitry that is temporarily configured by software to perform certain operations. For example, a hardware module may include software encompassed within a general-purpose processor or other programmable processor. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software may accordingly configure a processor, for example, to constitute a particular hardware module at one instance of time and to constitute a different hardware module at a different instance of time.

Hardware modules may provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and may operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, a processor being an example of hardware. For example, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an application program interface (API)).

The performance of certain of the operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Although an overview of the inventive subject matter has been described with reference to specific example embodiments, various modifications and changes may be made to these embodiments without departing from the broader spirit and scope of embodiments of the present invention. Such embodiments of the inventive subject matter may be referred to herein, individually or collectively, by the term "invention" merely for convenience and without intending to voluntarily limit the scope of this application to any single invention or inventive concept if more than one is, in fact, disclosed.

The embodiments illustrated herein are described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims, along with the full range of equivalents to which such claims are entitled.

As used herein, the term "or" may be construed in either an inclusive or exclusive sense. Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present invention. In general, structures and functionality presented as separate resources in the example configurations may be implemented as a combined structure or resource. Similarly, structures and functionality presented as a single resource may be implemented as separate resources. These and other variations, modifications, additions, and improvements fall within a scope of embodiments of the present invention as represented by the appended claims. The specification and drawings are, accordingly, to be regarded in an illustrative rather than a restrictive sense.

## Claims

1. Method to transmit an audio/video stream of to a destination device, said audio/video stream comprising a plurality first segments, each representing a first duration of video at original bit-rate, said method comprising :
- receiving by a transcoding node the audio/video stream in compressed form,
- decompressing the audio/video stream to obtain a decompressed video stream and an audio stream,
- dividing the decompressed video stream into a plurality of second segments, each segment representing a second duration of video at original bit-rate, said second duration being smaller than the first duration,
- generating at least one low bit-rate version of the second segment,
- compressing the at least one low bit-rate segment and the second segment,
- multiplexing the at least one low bit-rate segment, the second segment and the audio segment to produce a multi-bit-rate stream,
- transmitting the multi-bit-rate stream to at least one Network Access Point,
- demultiplexing by the Network Access Point the multi-bit-rate stream to obtain the second segment and the at least one lower bit-rate segment,
- receiving by the Network Access Point from the destination device a request to the audio/video stream,
- selecting the original bit-rate segment or one of the lower bit-rate segments,
- multiplexing the selected segment with the audio segment to form a multiplexed segment,
- transmitting the multiplexed segment to the destination device,
- receiving at least one acknowledgement message from the destination device that the multiplexed segment has been received,
- determining, by the Network Access Point, a level of completion of the multiplexed segment by the destination device, said level of completion being derived from the acknowledgment message,
- selecting the original bit-rate segment or one of the lower bit-rate segment based on the level of completion for the further multiplexed segment.

2. The method of claim 1, wherein the multiplexed segment is divided into a plurality of packets, the destination device sending a confirmation of receipt for each packet, the acknowledgment message corresponding to the confirmation of receipt of the last packet of the multiplexed segment.

3. The method of any of the claims 1 or 2, wherein the level of completion is positive in case that the destination device can process the multiplexed segment within the second duration and negative otherwise.

4. The method of any of the claims 1 to 3, wherein it comprises :
- calculating a transmission time between the beginning of the transmission of the multiplexed segment and the reception of the acknowledgement message, the level of completion is positive if the transmission time is equal or smaller than the second duration.

5. The method of any of the claims 1 to 4, wherein it comprises :
- extracting a status from the acknowledgement message, said status representing the level of completion of the multiplexed segment set by the destination device.

6. The method of any of the claims 2 to 5, wherein in response to a negative level of completion, the network Access Point selects a lower bit-rate segment.

7. The method of any of the claims 2 to 5, wherein in response to a positive level of completion, the network Access Point selects a segment of the same bit-rate as the one previously transmitted or a segment of higher bit-rate.

8. The method of claim 4, wherein in case that the transmission time is smaller than the second duration,
- calculating an available bandwidth to transmit the multiplexed segment based on a size of the multiplexed segment and the transmission time,
- in response to determining that the available bandwidth is sufficient to transmit a segment of higher bit-rate within the second duration, selecting a segment of higher bit-rate.

9. A system to transmit an audio/video stream of to a destination device comprising a Transcoding Node and at least one Network Access Point, said Transcoding Node being configured to :
- receive an original audio/video stream in compressed form,
- decompress the original audio/video stream to obtain a decompressed video stream and an audio stream, said decompressed video stream being segmented into a plurality of segments of a first duration,
- divide the decompressed video stream into a plurality of second segments, each segment representing a second duration of video at original bit-rate, said second duration being smaller than the first duration,
- generate at least one low bit-rate version of the second segment,
- compress the at least one low bit-rate segment and the second segment,
- multiplex the at least one low bit-rate segment, the second segment and the audio segment to produce a multi-bit-rate stream,
- transmit the multi-bit-rate stream to at least one Network Access Point,
and the Network Access Point is configured to :
- demultiplex the multi-bit-rate stream to obtain the second segment and the at least one lower bit-rate segment,
- receive from the destination device a request to the audio/video stream,
- select the original bit-rate segment or one of the lower bit-rate segments,
- multiplex the selected segment with the audio segment to form a multiplexed segment,
- transmit the multiplexed segment to the destination device,
- receive at least one acknowledgement message from the destination device that the multiplexed segment has been received,
- determine a level of completion of the multiplexed segment by the destination device, said level of completion being derived from the acknowledgment message,
- select the original bit-rate segment or one of the lower bit-rate segments based on the level of completion for the further multiplexed segment.

10. The system of claim 9, wherein the multiplexed segment is divided into a plurality of packets, the Network Access Point being further configured to :
- receive from the destination device a confirmation of receipt for each packet, the acknowledgment message corresponding to the confirmation of receipt of the last packet of the multiplexed segment.

11. The system of any of the claims 9 or 10, wherein the level of completion is positive in case that the destination device can process the multiplexed segment within the second duration and negative otherwise.

12. The system of any of the claims 9 to 11, the Network Access Point being further configured to :
- calculate a transmission time between the beginning of the transmission of the multiplexed segment and the reception of the acknowledgement message,
- set the level of completion as positive if the transmission time is equal or smaller than the second duration.

13. The system of any of the claims 9 to 11, the Network Access Point being further configured to :
- extract a status from the acknowledgement message, said status representing the level of completion of the multiplexed segment set by the destination device.

14. The system of any of the claims 9 to 13, the Network Access Point being further configured to :
- in response to a positive level of completion, selects a segment of the same bit-rate as the one previously transmitted or a segment of higher bit-rate.

15. The system of claim 12, the Network Access Point being further configured to :
- in case that the transmission time is smaller than the second duration, calculate an available bandwidth to transmit the multiplexed segment based on a size of the multiplexed segment and the transmission time,
- in response to determining that the available bandwidth is sufficient to transmit a segment of higher bit-rate within the second duration, select a segment of higher bit-rate.
